# FASCICULE DE BREVET EUROPEEN

(11) **EP 1 529 620 B1**
(45) Date de publication et mention de la délivrance du brevet: **25.02.2009**
(21) Numéro de dépôt: 03025525.1
(22) Date de dépôt: 06.11.2003
(51) Int. Cl.: B29C 49/46

(54) **Procédé de fabrication de contenants en résine polyester**
Herstellungsverfahren von Behältern aus Polyesterharz
Process of manufacturing containers made of polyester resin

(43) Date de publication de la demande: 11.05.2005
(73) Titulaire: Nestlé Waters Management & Technology, 92130 Issy-les-Moulineaux (FR)
(72) Inventeur: Denis, Gérard, 51100 Reims (FR); Contal, Alain, 8800 Epinal (FR)
(74) Mandataire: Ziegler, Stefan Michael

(56) Documents cités:
- EP-A- 0 499 136
- WO-A-02/24435
- WO-A-02/42055
- US-A- 4 883 631
- US-A- 5 622 735
- PATENT ABSTRACTS OF JAPAN vol. 0130, no. 83 (M-802), 27 février 1989 (1989-02-27) & JP 63 280615 A (TOKAN KOGYO CO LTD), 17 novembre 1988 (1988-11-17)
- PATENT ABSTRACTS OF JAPAN vol. 0062, no. 16 (M-168), 29 octobre 1982 (1982-10-29) -& JP 57 123027 A (PENTEL KK), 31 juillet 1982 (1982-07-31)

## Description

La présente invention concerne le domaine de la fabrication de contenants en matériau polymère, notamment en polyester. Plus particulièrement, elle concerne le domaine de la fabrication de bouteilles en polyester, de préférence en polyéthylène téréphtalate (PET), contenant un liquide, de préférence de l'eau et notamment de l'eau minérale.

La présente invention a pour objet un contenant polyester, son procédé de fabrication par injection sous pression de liquide dans une préforme. Elle a également pour objet un dispositif pour mettre en oeuvre ce procédé.

Depuis de nombreuses années, les bouteilles en PET que l'on trouve habituellement dans le commerce sont fabriquées par soufflage ou soufflage-étirage, à l'air comprimé, de préformes en PET.

Une préforme se présente habituellement sous forme de tube cylindrique fermé à l'une de ses extrémités et ouvert à son extrémité opposée. La tête de la préforme, ouverte, correspond au col du contenant. Au cours du procédé classique de fabrication du contenant à partir d'une préforme, les préformes sont enfilées, têtes en bas, sur les plots cylindriques d'une chaîne de convoyage continue qui transporte ainsi les préformes à travers un four, essentiellement constitué par une section rectiligne bordée de chaque côté de moyens de chauffage par rayonnement, ce afin de conditionner en température la matière plastique pour l'étape de soufflage-étirage subséquente.

La préforme chaude est ensuite prélevée et transportée dans un moule d'une machine de soufflage. Le mouvement de transport réalisé par un bras de transfert par exemple, est coordonné avec celui de la machine de soufflage qui est généralement réalisée sous la forme d'un carrousel rotatif tournant de manière continue autour de son axe vertical et qui porte, à sa périphérie, une série de moules identiques. Ainsi, la préforme est placée dans le moule immédiatement après que celui-ci se soit ouvert et que le contenant précédemment formé soit retiré.

La préforme est préalablement chauffée de manière à être dans le moule à une température supérieure à la température de transition vitreuse du PET (environ 100°C) afin de permettre la mise en forme par soufflage-étirage. La température de la préforme à la fin de l'étape de chauffage est légèrement supérieure à celle requise à l'intérieur du moule de la souffleuse, ce afin de tenir compte du refroidissement qui a lieu sur la distance existant entre le lieu de chauffage et le lieu du soufflage. Grâce au mouvement rotatif et à la présence simultanée de plusieurs moules, une telle machine de soufflage permet de produire des contenants à des cadences très élevées, de l'ordre de plusieurs dizaines de milliers d'unités à l'heure soit de l'ordre de 1000 à 2000 bouteilles par heure et par moule.

Le soufflage-étirage se fait par étirage à l'aide d'une tige métallique, une injection d'air se faisant à des pressions variant de 3 à 40 bars (3.10⁵ Pa à 4.10⁶ Pa). L'air est injecté à travers une buse dont l'extrémité est introduite à travers l'ouverture de la tête de la préforme.

Les bouteilles fabriquées par injection d'air sous pression ont une durée de vie relativement satisfaisante pour un poids et un type de matière donnés. Néanmoins, les caractéristiques et propriétés intrinsèques du PET peuvent laisser envisager des résultats encore meilleurs en modifiant le procédé de fabrication des contenants.

US 5,622,735 est un brevet américain délivré et publié le 22 avril 1997 qui concerne un appareil de distribution de fluide pour un moule de soufflage. Cet appareil comprend une valve de contrôle à positions multiples permettant alternativement de distribuer un fluide au moule de soufflage depuis une unité d'approvisionnement de fluide et une unité de mesure. La valve de contrôle possède une position supplémentaire configurée de manière à pouvoir remplir l'unité de mesure avec le fluide, et vider la cavité du moule de soufflage dans un conduit de vidange. Cet appareil est utile pour créer des cycles de soufflage pulsés à haute cadence en augmentant ainsile niveau de cristallinité dans le corps du contenant ainsi formé.

WO 02/24435 A1 est une demande de brevet international publiée le 28 mars 2002, qui concerne une machine de fabrication de récipients en matière thermoplastique par étirage et soufflage d'une préforme, du type comportant au moins une tige d'étirage qui est commandée en coulissement selon son axe par un actionneur, d'une position escamotée à une position d'étirage maximum, pour assurer l'étirage de la préforme au cours de l'opération de soufflage. La machine est caractérisée en ce que, lors du retour de la tige d'étirage vers sa position escamotée, l'actionneur est au repos, le retour de la tige étant assuré par la pression de soufflage qui règne à l'intérieur du récipient en cours de la fabrication et qui agit sur l'extrémité de travail de la tige.

WO 02/42055 A1**,** qui est considéré comme le document de l'art antérieur le plus pertinent, est une demande de brevet internationale publiée le 30 mai 2002. Elle concerne un procédé de moulage de préformes thermoplastiques en des bouteilles ou similaires, procédé dans lequel on utilise des liquides comme de l'eau comme fluide d'étirage, en lieu et place des gaz traditionellement utilisés, comme par exemple de l'air chaud. Le résultat est un meilleur contrôle du degré de cristallisation du matériau plastique, ainsi que des économies d'échelle. Le liquide de soufflage est retiré de la bouteille à la fin de l'étape d'étirage, avant l'étape de remplissage de ladite bouteille avec le liquide à conditionner.

Eventuellement, l'étape de vidange post-soufflage peut être suivie d'un séchage à l'air.

JP-A-63280615 est une demande de brevet japonais publiée le 17 novembre 1988. Cette demande de brevet concerne un procédé de soufflage de préformes en matériau thermoplastique afin d'obtenir des bouteilles. Selon l'invention décrite, le degré de cristallinité est maintenu à 35% ou plus en utilisant pour le soufflage un fluide à très haute température, en ajustant les paramètres de pression et de refroidissement de manière appropriée.

Un des objectifs de la présente invention est par conséquent de proposer un procédé amélioré de fabrication d'un contenant en polyester à partir d'une préforme.

Un autre objectif est de pouvoir éventuellement intégrer l'étape de remplissage du contenant dans le processus de fabrication de ce dernier. Il existe déjà des développements dans l'état de la technique selon lesquels le contenant est soufflé-étiré-moulé par le liquide qui va remplir ensuite ledit contenant. Le brevet JP 63249616 au nom de Komatsu Ltd. concerne un tel développement. Le matériau mis en oeuvre est du polyéthylène, du polypropylène ou du polychlorure de vinyle. Le brevet FR 1430316 concerne aussi un tel système de remplissage, mais dans ce cas avec du polytétrafluoroéthylène. Aucun des documents connus ne concerne une approche de remplissage avec du polyester. Il n'y a pas dans les matériaux précités la spécificité du polyester qui est de cristalliser lors de l'étirage. Tous les matériaux précités sont amorphes et/ou semi-cristallins et le restent lors de l'étirage.

La présente invention concerne un procédé de fabrication d'un contenant en résine polyester selon la revendication 1.

D'autres modes de réalisation font l'objet des revendications dépendantes 2 à 5.

Le polyester du contenant obtenu a une cristallinité comprise entre 25 et 50 %. Le but de la présente invention est d'obtenir la cristallinité la plus élevée possible, car cristallinité élévée signifie meilleure tenue mécanique du contenant. Sans vouloir être tenu par une théorie scientifique, il est connu que la préforme en polyester est amorphe et que l'étirage induit une cristallisation et en même temps, une réaction exothermique. Le dégagement de chaleur est néfaste au développement de cristallinité. Selon la présente invention, on opère donc par un étirage premier avec la canne d'étirage, induisant une cristallisation et un dégagement de chaleur et à ce moment là, on introduit le fluide incompressible qui va absorber très rapidement cette chaleur émise et permettre ainsi de déplacer le point d'équilibre de la cristallinité obtenue dans le contenant final vers le haut, de préférence entre 30 et 50 %.

La mesure de la cristallinité est effectuée sur une colonne de densité de Lloyd-Davenport selon le procédé suivant. La colonne est remplie avec une solution salée (nitrate de calcium) ayant un gradient de densité. La colonne est étalonnée avec des billes ayant une densité connue comprise entre 1,335 et 1,455. Ensuite, des petits morceaux du contenant selon l'invention sont immergés dans la colonne et après un certain temps, elles se stabilisent à une certaine hauteur de la colonne correspondant à une certaine densité. Les mesures sont effectuées à 23 °C. Le tableau suivant de correspondance avec un ρ_{c} de 1,455 donne la cristallinité. Dans le tableau, il faut donc regarder seulement la partie droite de la cristallinité

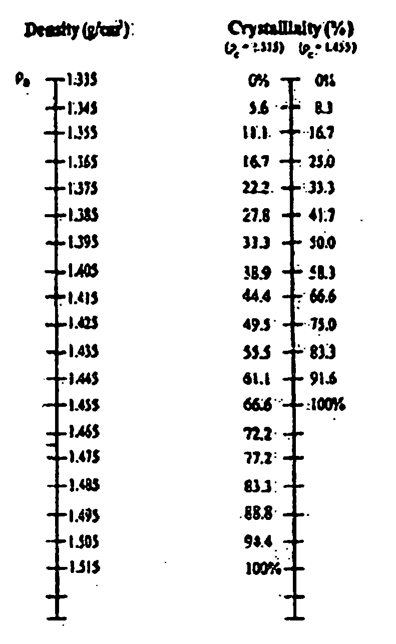

Les contenants obtenus grâce à ce procédé ont des caractéristiques bien meilleures que ceux obtenus avec un procédé de soufflage-étirage de type classique à gonflage par fluide gazeux. Notamment, il a été constaté qu'ils avaient une durée de vie supérieure pour un poids et un type de matière donnés. Le taux de cristallinité, c'est-à-dire la masse de phase cristalline par rapport à la masse totale de polymère, d'un contenant obtenu avec le procédé selon l'invention peut notamment être beaucoup plus important.

Par exemple, dans le cas de bouteilles en PET, les bouteilles obtenues par le procédé selon l'invention peuvent avoir des niveaux de cristallinité compris entre 30% et 50% ce qui leur confère des durées de vie supérieures aux bouteilles actuellement obtenues pour un même poids et un même type de PET possédant des niveaux de cristallinité compris entre 25% et 30%.

Selon un autre aspect de la présente invention, ledit fluide incompressible est un liquide injecté sous pression, sous une vitesse et une pression contrôlées, (en quantité contrôlée), préférentiellement le liquide destiné à être contenu dans ledit contenant final à former. La vitesse de la canne d'étirage pour l'étirage de la préforme est comprise entre 1 et 2 m/s. Par voie de conséquence, le matériau du contenant a la même vitesse de déplacement dans le moule.

Ainsi, le liquide utilisé pour la fabrication des contenants peut être le liquide à conditionner, par exemple de l'eau et notamment de l'eau minérale, ce qui permet de se passer d'une étape ultérieure de remplissage. Les étapes de fabrication de contenants et de remplissage de ces contenants se trouvent ainsi intégrées en une seule et même étape. Cette solution présente bien évidemment d'importants avantages économiques et limite les risques de contamination, en particulier bactérienne, du contenant vide.

Avantageusement, lorsque ledit contenant à former est une bouteille en PET, ladite préforme est chauffée à une température supérieure à la température de transition vitreuse dudit PET, typiquement aux environs de 75°C à 85°C, lors de ladite étape de chauffage et la température dudit fluide incompressible est comprise entre 10°C et 90°C lors de ladite étape d'expansion.

Conformément à un mode de réalisation préféré de l'invention, ladite température du fluide incompressible est d'environ 15°C.

Il est également proposé un dispositif pour mettre en oeuvre un procédé du type qui vient d'être défini, caractérisé en ce qu'il comprend essentiellement
- un système à double vérin comportant une embouchure pour l'arrivée de fluide incompressible et
- un moule dans lequel est disposé la préforme comportant une ouverture,
   ledit système à double vérin étant disposé au dessus dudit moule de manière à raccorder son embouchure sur l'ouverture de la préforme au moment de l'étirage-remplissage.

Le système à double vérin comprend
- un premier piston permettant le raccordement dudit système avec l'ouverture de la préforme,
- un second piston co-axial avec le premier piston et permettant le remplissage de fluide incompressible dans la préforme, les deux pistons étant mus par l'air dans les chambres respectives desdits pistons et
- une canne d'étirage co-axiale avec le premier et le second piston.

Le procédé selon l'invention pourra être mis en oeuvre avec une installation spécifiquement construite à cet effet et présentant les différents éléments évoqués ci-dessus.

Avantageusement, l'arrivée de fluide incompressible est raccordée à une arrivée d'une ligne d'alimentation en liquide, préférentiellement en liquide de remplissage des contenants à former.

De la sorte, comme il a été expliqué plus haut, le liquide utilisé pour la fabrication des contenants est le liquide à conditionner, ce qui permet de se passer d'un dispositif supplémentaire de remplissage. Les dispositifs de fabrication de contenants et de remplissage de ces contenants se trouvent ainsi intégrés en un seul et même dispositif.

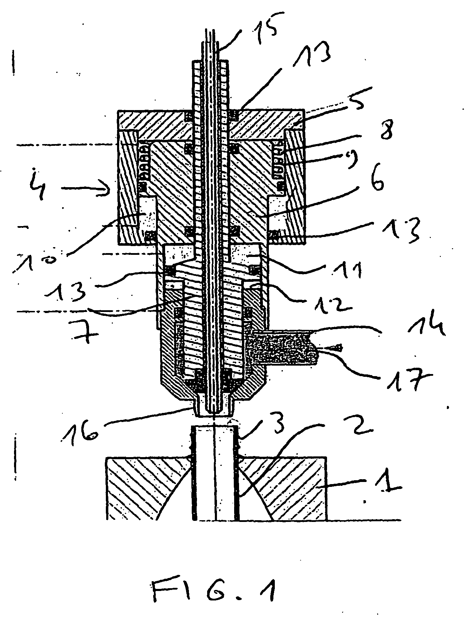

L'invention sera mieux comprise grâce à la description ci-après, qui se rapporte à un mode de réalisation préféré, donné à titre d'exemple non limitatif, et expliqué avec référence aux dessins, sur lesquels
Figure 1 est coupe schématique du dispositif selon l'invention avant l'étirage-expansion-remplissage et

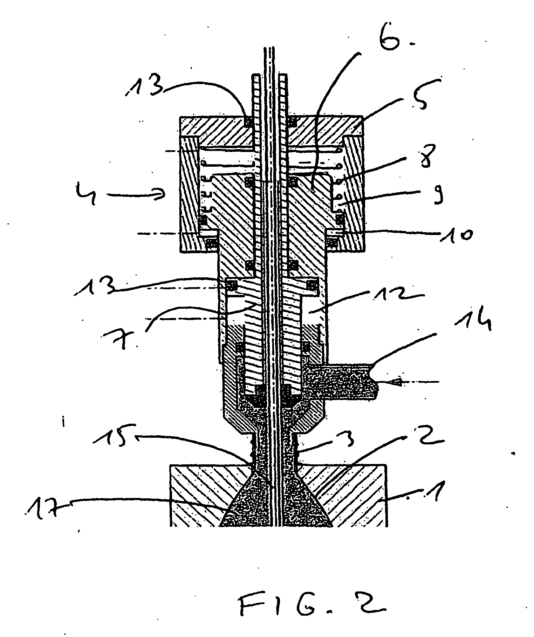

Figure 2 est une coupe schématique du même dispositif pendant la phase d'étirage-expansion-remplissage.

Le mode de réalisation donné ici à titre d'exemple se rapporte à un procédé de fabrication de bouteilles d'eau en PET à partir d'une préforme chauffée. Ainsi qu'on le voit sur les figures annexées, une préforme se présente sous la forme d'un tube cylindrique fermé à son extrémité inférieure. La tête de la préforme, ouverte, correspond au col de la bouteille, c'est à dire, dans ce cas, au goulot sur lequel doit être vissé un bouchon.

Le procédé est mis en oeuvre au moyen de modifications apportées à une installation de fabrication de bouteilles d'eau minérale en PET, telle que décrite précédemment dans la partie introductive de la présente.

Selon la présente invention, lors de l'étape d'expansion, est injecté à travers l'ouverture de la préforme non pas de l'air sous pression, mais un fluide incompressible. On utilisera avantageusement comme fluide incompressible permettant la mise en forme de la bouteille le liquide que cette bouteille doit contenir, de manière à supprimer une étape ultérieure de remplissage.

Afin de mettre en oeuvre l'invention, des modifications sont apportées à une installation de fabrication de bouteilles en PET, ainsi qu'on le voit sur les figures annexées.

Les figures représentent de manière schématique un moule 1 à l'intérieur duquel est renfermé le corps d'une préforme 2. Le col 3 de la préforme dépasse à l'extérieur du moule. Le systéme à double vérin 4 associée au moule 1 est prévu pour être disposé au dessus dudit moule de manière à être raccordé sur l'ouverture 3 de la préforme 2 au moment de l'étirage-expansion-remplissage. Le système à double vérin comprend un corps 5 avec un premier piston 6 et un second piston 7. Le premier piston 6 comprend un ressort 8 disposé dans la chambre 9 et une chambre 10. Le second piston 7 comprend une chambre 11 et une chambre 12. Dans tout le système, il est prévu des joints d'étanchéité 13, affectés du même numéro de référence. Les différentes chambres des pistons sont reliées soit à un système d'air sour pression, soit à la pression atmosphérique. La canalisation 14 permet l'arrivée de fluide incompressible 17, à savoir l'eau permettant le remplissage de la préforme. Le piston 6 permet le raccordement du double vérin avec le col 3 de la préforme et le piston 7 permet l'entrée de fluide incompressible dans ladite préforme. Il est prévu finalement une canne d'étirage 15 co-axiale avec le premier et le second piston.

Le fonctionnement du dispositif selon l'invention est le suivant. Il faut tout d'abord que la préforme soit chauffée à une température suffisante pour lui permettre de subir un étirage. La préforme chauffée est alors introduite dans le moule 1 et le cycle peut commencer. Au départ, la chambre 10 du piston 6 est mise a pression d'air de l'ordre de 10 bar , de sorte que le ressort 8 est bandé. Pour permettre la descente du système à double vérin 4, la chambre 10 est mise à la pression atmosphérique, ce qui fait descendre le piston 6 et ainsi plaquer l'embouchure 16 contre l'ouverture 3 de la préforme 2. Ensuite, la canne d'étirage 15 est mise en mouvement pour descendre dans la préforme de manière à opérer un étirage vertical. Il est alors temps de permettre à l'eau d'arriver dans la préforme. La chambre 11 du piston 7 est à une pression de l'ordre de 10 bar et la chambre 12 à la pression atmosphérique. Il suffit alors de mettre une pression de l'ordre de 10 bar dans la chambre 12 et laisser la chambre 11 à l'échappement pour que le piston 7 se dégage du siège de l'embouchure 16 et permette l'entrée d'eau dans la préforme, induisant de la sorte un étirage horizontal. Comme déjà mentionné ci-dessus, l'étirage induit un dégagement de chaleur absorbé par le fluide incompressible , permettant ainsi au contenant final d'avoir une cristallinité plus élevée que dans les dispositifs de soufflage-étirage classiques. Ensuite, le cycle recommence sur une nouvelle préforme. Il est bien entendu qu'on fera usage d'une machine classique de moulage, dans lequel on disposera une nouvelle tête d'étirage-remplissage.

L'ensemble du système est commandé par des servomécanismes de commande pilotés par une unité centrale de commande d'asservissement ou automate (non représenté) de l'installation de fabrication de bouteilles de manière à ce que le fonctionnement du dispositif d'injection d'eau soit coordonné avec le fonctionnement de la machine de formage (soufflage) et, plus généralement avec le fonctionnement de l'ensemble de l'installation de fabrication de bouteilles.

Le fonctionnement du dispositif d'injection d'eau, coordonné avec le fonctionnement de la machine de formage ou de soufflage, est réalisé suivant un cycle d'injection d'une durée inférieure à la durée du cycle de rotation d'un moule autour de l'axe de la machine de formage.

L'optimisation du procédé se fait pour un taux d'étirage prédéterminé, une température de préforme supérieure à la température de la transition vitreuse du polyester utilisé et une vitesse d'injection rapide, supérieure à celle de refroidissement du matériau mis en oeuvre. Ainsi, un autre avantage est un temps de cycle très court, le temps d'injection du fluide incompressible étant nettement inférieur à la seconde, de préférence compris entre 0,02 s et 0,5 s et plus préférentiellement entre 0,1 s et 0,2 s.

La pression du fluide incompressible est supérieure à 1 bar, de préférence comprise entre 1 et 10 bar.

Afin d'éliminer les bulles d'air éventuelles contenues dans le circuit, est également prévu un cycle de purge. Le cycle de départ est défini via l'automate.

La température de l'eau peut être comprise entre 10°C et 90°C suivant les contraintes techniques imposées par la bouteille que l'on désire produire. Il faut notamment que la pression soit assez importante pour déformer la préforme et les basses températures imposent des pressions plus importantes. Toutefois, lorsque les contraintes techniques le permettent, la température du liquide sera avantageusement de 15°C.

Avantageusement, afin que le col 3 de la préforme 2 ne risque pas d'être déformé pendant le cycle d'expansion, ce dernier est isolé du liquide par une pièce étanche et/ou refroidi.

Les contenants obtenus grâce à ce procédé ont des caractéristiques bien meilleures que ceux obtenus avec un procédé d'expansion de type classique à soufflage par fluide gazeux. Notamment, ils ont une durée de vie supérieure pour un poids et un type de matière donnés. Le taux de cristallinité, c'est à dire la masse de phase cristalline par rapport à la masse totale de polymère, d'un contenant obtenu avec un procédé selon l'invention peut notamment être beaucoup plus important. L'utilisation de vitesses d'expansion rapides permet d'obtenir un taux d'étirage assez élevé et une cristallisation induite qui l'est également.

Par exemple, dans le cas d'essais réalisés avec de l'eau à des températures d'eau allant de 85°C à 95°C et sous des pressions allant de 2 bars à 3 bars (2.10⁵ Pa à 3.10⁵ Pa) dans le cas de contenants en PET, les contenants obtenus par le procédé selon l'invention avaient des niveaux de cristallinité pouvant aller jusqu'à 50%. On a intégré pour obtenir ce taux, toutes les phases non amorphes, c'est à dire la phase cristalline et la mésophase.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de fabrication d'un contenant en résine polyester à partir d'une préforme (2) se présentant sensiblement sous forme d'un tube cylindrique comportant une ouverture (3), préférentiellement au niveau d'un col, ledit procédé comprenant une étape de chauffage de ladite préforme (2) à une température supérieure à la température de transition vitreuse dudit polyester, une étape d'introduction de ladite préforme (2) dans un moule (1), **caractérisé en ce qu'**on réalise une première étape d'étirage de ladite préforme (2) par une canne d'étirage (15) suivie d'une étape d'expansion effectuée à l'intérieur d'une cavité, et **caractérisé en ce que**, lors de ladite étape d'expansion, un fluide incompressible (17) sous la forme d'un liquide est injecté sous pression, avec une vitesse et une pression contrôlées, à travers l'ouverture (3) de ladite préforme (2) pour former ledit contenant, le liquide injecté (17) correspondant au liquide destiné à être contenu dans le contenant.

2. Procédé selon la revendication 1, **caractérisé en ce que** la vitesse de la canne d'étirage (15) pour l'étirage de la préforme (2) est comprise entre 1 et 2 m/s.

3. Procédé selon l'une quelconque des revendications 1 ou 2, **caractérisé en ce que** ledit contenant à former étant une bouteille en PET, ladite préforme (2) est chauffée à une température supérieure à la température de transition vitreuse dudit PET, typiquement aux environs de 75 °C à 85 °C, lors de ladite étape de chauffage et la température dudit fluide incompressible (17) est comprise entre 10°C et 90 °C lors de ladite étape d'expansion.

4. Procédé selon la revendication 3, **caractérisé en ce que** ladite température du fluide incompressible (17) est d'environ 15°C.

5. Procédé selon l'une quelconque des revendications précédentes **caractérisé en ce que** le temps d'injection du fluide incompressible (17) est nettement inférieur à la seconde, de préférence compris entre 0,02 s et 0,5 s et plus préférentiellement entre 0,1 s et 0,2 s.

## Claims

1. Process of manufacturing a container made of polyester resin from a preform (2), which is substantially in the form of a cylindrical tube comprising an opening (3), preferably at the neck, said process comprising a stage of heating the said preform (2) to a temperature which is higher than the vitreous transition temperature of the said polyester, a stage of introducing the said preform (2) into a mould (1), **characterized in that** there is a first stage in which the said preform (2) is stretched by a stretching tube (15) followed by an expansion stage performed inside a cavity, and **characterized in that** during the said expansion stage an incompressible fluid (17) in the form of a liquid is injected under pressure, at a controlled speed and pressure, through the opening (3) of the said preform (2) to form the said container, whereby the injected liquid (17) corresponds to the liquid intended to be stored in the container.

2. Process according to claim 1, **characterized in that** the speed of the stretching tube (15) for stretching the preform is between 1 and 2 m/s.

3. Process according to either of claims 1 or 2, **characterized in that** the said container to be formed is a PET bottle, said preform (2) is heated to a temperature greater than the vitreous transition temperature of said PET, typically to in the region of 75°C to 85°C, when said stage of heating and the temperature of said incompressible fluid (17) is between 10°C and 90°C during said expansion stage.

4. Process according to claim 3, **characterized in that** the said temperature of the incompressible fluid (17) is about 15°C.

5. Process according to any one of the preceding claims, **characterized in that** the injection time of the incompressible fluid (17) is distinctly lower than a second, preferably between 0.02 s and 0.5 s, and more preferably between 0.1 s and 0.2 s.

## Patentansprüche

1. Verfahren zur Herstellung eines Behälters aus Polyesterharz aus einem Vorformling (2), der etwa die Form einer zylindrischen Röhre besitzt, die eine Öffnung (3) vorzugsweise auf dem Niveau eines Halses umfasst, wobei das Verfahren einen Schritt des Erhitzens des Vorformlings (2) auf eine Temperatur, die höher als die Glastemperatur des Polyesters liegt, einen Schritt der Einführung des Vorformlings (2) in eine Form (1) umfasst, **dadurch gekennzeichnet, dass** man einen ersten Schritt des Ziehens des Vorformlings (2) durch ein Ziehrohr (15) durchführt, gefolgt von einem im Inneren eines Hohlraumes ausgeführten Schritt der Ausdehnung, und **dadurch gekennzeichnet, dass** bei dem Schritt der Ausdehnung ein inkompressibles Fluid (17) in Form einer Flüssigkeit unter Druck mit einer kontrollierten Geschwindigkeit und einem kontrollierten Druck durch die Öffnung (3) des Vorformlings (2) eingespritzt wird, um den Behälter zu formen, wobei das eingespritzte Fluid (17) der Flüssigkeit entspricht, die dazu bestimmt ist, in dem Behälter enthalten zu sein.

2. Verfahren gemäß Anspruch 1, **dadurch gekennzeichnet, dass** die Geschwindigkeit des Ziehrohrs (15) für das Ziehen des Vorformlings (2) zwischen 1 und 2 m/s liegt.

3. Verfahren gemäß einem der Ansprüche 1 oder 2, **dadurch gekennzeichnet, dass** wenn der zu formende Behälter eine PET-Flasche ist, der Vorformling (2) mit einer höheren Temperatur als die Glastemperatur des PET, bei dem der Schritt des Erhitzens typischer weise in der Nähe von 75°C bis 85°C liegt, erhitzt wird und die Temperatur des inkompressiblen Fluids (17) beim Schritt der Ausdehnung zwischen 10°C und 90°C liegt.

4. Verfahren gemäß Anspruch 3, **dadurch gekennzeichnet, dass** die Temperatur des inkompressiblen Fluids (17) ungefähr 15°C beträgt.

5. Verfahren gemäß einem der vorhergehenden Ansprüche, **dadurch gekennzeichnet, dass** die Zeit zum Einspritzen des inkompressiblen Fluids (17) deutlich kleiner als eine Sekunde ist, vorzugsweise zwischen 0,02 s und 0,5 s gefasst und vorzugsweise eher zwischen 0,1 s und 0,2 s.
